(19) Europäisches Patentamt
European Patent Office
Office européen des brevets

(11) **EP 2 618 310 B1**

(12) **EUROPEAN PATENT SPECIFICATION**

(45) Date of publication and mention
of the grant of the patent:
**03.12.2014 Bulletin 2014/49**

(51) Int Cl.:
***G06T 13/20*** *(2011.01)*

(21) Application number: **12151415.2**

(22) Date of filing: **17.01.2012**

(54) **Computer-implemented method and apparatus for animating the mouth of a face**

Computerimplementiertes Verfahren und Vorrichtung zur Animierung des Mundes eines Gesichts

Procédé informatique et appareil pour animer la bouche d'un visage

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.07.2013 Bulletin 2013/30**

(73) Proprietor: **NTT DoCoMo, Inc.**
**Tokyo (JP)**

(72) Inventors:
 • **Knothe, Reinhard**
 **4058 Basel (CH)**
 • **Vetter, Thomas**
 **4057 Basel (CH)**
 • **Ajaj, Rami**
 **80798 Munich (DE)**
 • **Fahrmair, Michael**
 **81375 Munich (DE)**

(74) Representative: **Betten & Resch**
**Theatinerstrasse 8**
**80333 München (DE)**

(56) References cited:
**US-A1- 2009 231 347**

 • **MELENCHON J ET AL: "Lip animation of a personalized facial model from auditory speech", SIGNAL PROCESSING AND INFORMATION TECHNOLOGY, 2003. ISSPIT 2003. PROCE EDINGS OF THE 3RD IEEE INTERNATIONAL SYMPOSIUM ON DARMSTADT, GERMANY 14-17 DEC. 2003, PISCATAWAY, NJ, USA,IEEE, 14 December 2003 (2003-12-14), pages 255-258, XP010729142, ISBN: 978-0-7803-8292-3**
 • **MELENCHON J ET AL: "Text to visual synthesis with appearance models", PROCEEDINGS 2003 INTERNATIONAL CONFERENCE ON IMAGE PROCESSING (CAT. NO.03CH37429), BARCELONA, SPAIN, 14-17 SEPT. 2003; [INTERNATIONAL CONFERENCE ON IMAGE PROCESSING], IEEE, IEEE PISCATAWAY, NJ, USA, vol. 1, 14 September 2003 (2003-09-14), pages 237-240, XP010669729, ISBN: 978-0-7803-7750-9**
 • **KSHIRSAGAR S ET AL: "Principal components of expressive speech animation", COMPUTER GRAPHICS INTERNATIONAL 2001. PROCEEDINGS 3-6 JULY 2001, PISCATAWAY, NJ, USA,IEEE, 3 July 2001 (2001-07-03), pages 38-44, XP010552299, ISBN: 978-0-7695-1007-1**

**Description**

**FIELD OF INVENTION**

The present invention relates to a computer-implemented method for animating a mouth of a face and a corresponding apparatus.

In one embodiment it relates to the field of human-like virtual avatars. More specifically, it increases the realism and the naturalness of the mouth animation of the speaking avatar. Such human-like avatars could be online virtual assistants, virtual teachers, personal avatars (e.g. that replace persons in video chats) and many more.

**BACKGROUND OF THE INVENTION**

Animating characters is a challenging technological field in the area of computer graphics. It is used when producing animated movies, but also it can be used not only for movies but for animating so-called avatars.

Virtual avatars are widely used in many applications such as online assistants or as e-teachers. They express their selves through speech and body movement to relate the information in a realistic way. The expressivity and the naturalness of animations make these avatars appreciated by users. Therefore users appreciate using a service when it offers a natural and a good quality avatar.

In order to provide a natural speech expression, the lips (i.e. the visual part of the speech) must be synchronized with the speech (i.e. the audio) and must be animated in a natural way. This process is usually done in two steps:

- Define keyframes corresponding to visemes (i.e. visual phoneme which is the smallest unit of sound that distinguishes meaning)
- Interpolate or perform the animation between keyframes

This is the approach used in "Principal Components of Expressive Speech Animation "by S. Kshirsagar et al.

The definition of the keyframes as well as their synchronization with audio is important to avoid any audio-visual discontinuity. The second step is also important to offer a realistic and natural animation and avoid any visual discontinuities. These discontinuities (i.e. the audio-visual and the visual ones) degrade the realism level and the naturalness of the avatar and will disturb the users. This may lead users to avoid using a service if it uses a non-natural avatar.

Facial Animation is an active research area since years, for an extensive survey one refer to Deng and Noh: Computer Facial Animation: A Survey (in: Deng and Neumann Data-Driven 3D Facial Animation). The existing solutions can be categorized into heuristic approaches, sample-based approaches and learning-based approaches.

Heuristic approaches use manually created viseme shapes and empirical smooth functions. Sample-base approaches acquire 'triphone video segments' and use them to model the coarticulation.

Learning-based approaches learn the visemes and coarticulation from data. For example, Brand uses a HMM-based model (see Brand: Voice pupperty. SIGGRAPH 99). In Ezzat, Geiger and Poggio: Trainable videorealistic speech animation. ACM Trans. Graph., 388-398, 2002, there is used a mutidimensional Morphable Model. To use a Viseme model with one scan per viseme is e.g. disclosed in V. Blanz, C. Basso, T. Poggio and T. Vetter, "Reanimating Faces in Images and Video" EUROGRAPHICS 2003. In Deng, Neumann, Lewis, Kim, Bulut, Narayanan. Expressive facial animation synthesis by learning speech co-articulations and expression spaces, IEEE Transaction on Visualization and Computer Graphics, 2006, it is disclosed to learn co-articulation models.

It is an object of the present invention to improve mouth animation such that it increases the realism and the naturalness of the mouth animation of the speaking avatar. Such human-like avatars could be online virtual assistants, virtual teachers, personal avatars (e.g. that replace persons in video chats) and many more.

**SUMMARY OF THE INVENTION**

The present invention is defined by the independent claims. Further embodiments thereof are described by the dependent claims.

In this manner the possible variability of viseme representations can be taken into account to thereby achieve a more natural animation.

The statistical model and the smoothness criterion allow for the application and implementation of a Bayes model.

According to one embodiment Said plurality of I samples are samples of a certain visemes spoken by different subjects; or

said plurality of I samples are samples of a certain viseme belonging to different words or spoken by a subject at different times.

This allows taking into account the variability of the visemes into the model.

According to one embodiment registered scan of person i for viseme v is denoted with xvi ,the corresponding neutral-free scan

$$\xi_i^v = \mathbf{x}_i^v - \mathbf{x}_i^{neut}$$

is computed by subtracting the neutral scan $\mathbf{x}_i^{neut}$ of the same individual. I, and the neutral-free scans for all visemes are stacked to the data matrix

This extracts the viseme shape and eliminates the neutral scan effect on the shape.

According to one embodiment said obtaining a statistical model that describes the variability of each of the visemes which have been scanned within the Face Animation Model comprises: projecting all scans i of a specific viseme v into the Face Animation Model by

$$\beta_{i,v} = \mathrm{diag}(\sigma_i^v)\mathbf{V}^T\xi_i^v$$

This enables the implemantation of a statistical model.

According to one embodiment the statistical models for each of the visemes

$$\mathcal{V} = (\mathrm{diag}(\sigma_i), \mathbf{B}, \bar{\beta} \in R^n)$$

are the defined by the mean within the FAM ($\bar{\beta} \in R^n$), a (column-) orthonormal matrix of components B and a weighting diag($\sigma$i).

According to one embodiment
for animating a list of visems $v_i$ at time $t_i$

$$\mathcal{L} = (\mathcal{V}_i, t_i)$$

the animation is generated by fitting a smooth trajectory through the

Face Animation Model

$$\beta(t) : R \rightarrow R^n$$

that defines a sequence of shapes

$$\xi(\beta(t)) = \mathrm{diag}(\sigma_i^v)\mathbf{V}\beta(t)$$

in vertex space.

This enables the deriation of an optimum trajectory.

According to one embodiment probability of the list of visems given the trajectory

$$\prod p(\mathcal{V}_i|\beta(t_i)) = \prod \dots e^{-\frac{1}{2}\|\mathrm{diag}(\sigma_i)^j \mathbf{B}^{j^T}(\beta(t_i) - \bar{\beta}^i)\|^2}$$

This allows the implementation of the probability distribution
According to one embodiment

$$p(\beta) = \prod p(\beta(t_i))$$
$$= \prod \eta_1 \ldots e^{-\frac{1}{2}\|\nabla\xi(\beta(t_i))\|^2} + \eta_2 \ldots e^{-\frac{1}{2}\|\nabla^2\xi(\beta(t_i))\|^2}$$

According to one embodiment
to maximize the probability, there is minimized the cost function

$$CF = \log p(\mathcal{V}|\beta) \cdot p(\beta) = \log p(\mathcal{V}|\beta) + \log p(\beta)$$

## DESCRIPTION OF THE DRAWINGS

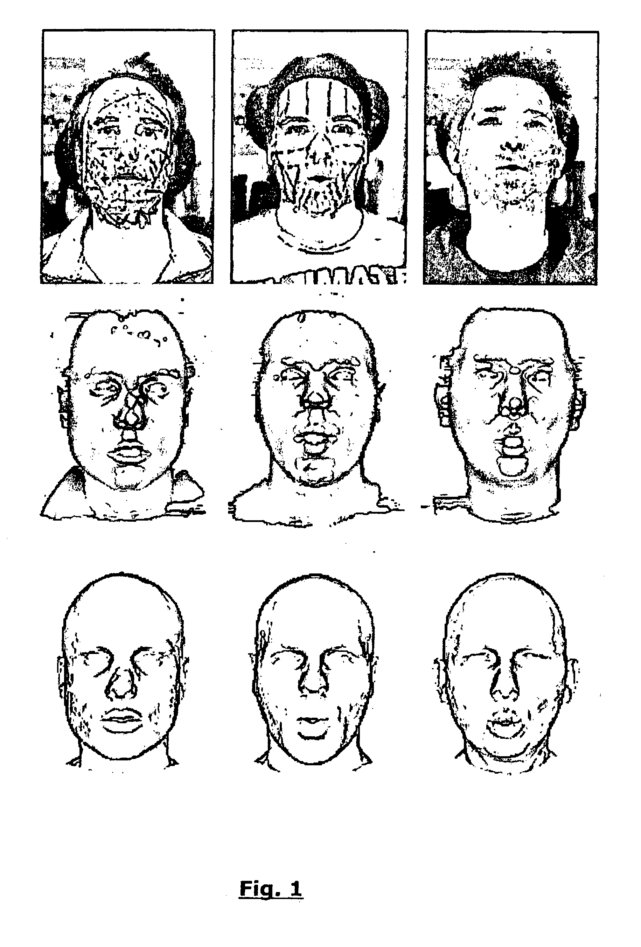

Figures 1 to 4 schematically illustrated embodiments of the invention.

## DETAILED DESCRIPTION

In the following several embodiments of the invention will be described.
According to one embodiment the method to animate the mouth of the avatar accordingly to the speech is:

- obtaining a set of possible shapes for each viseme
- Create a Face Animation Model (FAM) which is a generative statistical model that is able to generate all possible mouth movements for all visemes in a visems space through components of movement
- Find the statistically best path between visemes in the FAM viseme space

The creation of multiple shapes for each viseme offers flexibility for the expression of each viseme. Indeed, the expression of a viseme can vary in different cases (e.g. from a person to another and from a word to another). Therefore, this wider set of shapes for each viseme allows having a larger set of possibilities.
Since a viseme can be expressed in different ways (i.e. with slight variations by the components in the viseme space assuming different values), a choice has to be made for identifying the most suitable expressed viseme (the "best values" for the components). In order to accomplish that, a generative statistical model is created. This model (i.e. the FAM) is able to generate all possible mouth movements between all possible shapes of visemes. It can be visualized as a space enclosing all possible mouth movements based on the sets of shapes which have been created in the step of creating the face animation model. After the creation of the FAM, the next step is to find the best path in this space in order to naturally interpolate between the shapes representing the individual visemes of a sequence.
In contrast to previous approaches that use a single shape per viseme, in this approach a statistical 3D model of the mouth shape for each viseme is used. This model codes the variability of the mouth shape for a specific viseme across different subjects (or, in another embodiment, across different words containing the same viseme). The key advantage of this approach is that it allows a much more natural mouth animation: It allows, according to one embodiment, the interpolation between the keyframes using a Bayesian approach with a trade-off between the likeliness of the mouth shape to belong to the extracted viseme at time t and an a-priory assumption on the smoothness of the trajectory.
In the following further embodiments will be described in somewhat more detail.
The embodiment descried in the following makes use of a specific 3D face model called the Morphable Model (MM) and which is described in V. Blanz and T. Vetter, "A Morphable Model for the Synthesis of 3D Faces " SIGGRAPH 99, 187-194. However, any model which is capable of representing the animated visemes in a viseme space where a viseme consists of individual components representing the viseme may be used.
In this embodiment there will be described a face animation system that is able to generate a realistic and plausible animation of the mouth (including the teeth) for a specific person. For the mouth movements there are used statistical models of the mouth shape (i.e. one statistical model for each of the 13 visemes) that are learned from data.
For this, several step are performed.

In a first step the visemes are acquired or obtained.

The visemes are obtained with a known scanning device. According to one embodiment, per identity (i.e. per person), there are acquired 16 scans (the set of 13 viseemes and 3 neutral scans with closed mouth as reference). In the embodiment there are scanned the visemes of 12 identities, giving in total 192 scans. Other values for the nunber of scans or persons may be chosen as well.

In a next step the face animation model is generated. The Face Animation Model (FAM) is a generative statistical model that is able to generate all possible mouth movements for all visemes. The FAM is used together with the Morphable Model (MM): the MM codes the identity and is used to compute the 3D reconstruction. The FAM codes the mouth movements (and does not affect the identity) and is used for the face animation.

To compute the FAM, first the scans are brought into correspondence, this defines a common parametrization (i.e. a common mesh) for all scans, as shown in the 3rd row of Fig. 1, for the example. Fig. 1 shows some example scans for the viseme ao for three identities (1st, 2nd, 3rd columns resp.). The second row shows the raw scan, the third row the preprocessed data

The registered scan of person i for viseme v is denoted with $x_{vi}$ and the corresponding neutral-free scan

$$\xi_i^v = x_i^v - x_i^{neut}$$

is computed by subtracting the neutral scan $x_i^{neut}$ of the same individual. The neutral-free scans for all visemes are stacked to the data matrix

$$X = [\xi_1^{ao}, \xi_2^{ao}, \ldots, \xi_1^v, \ldots, \xi_i^v, \ldots]$$

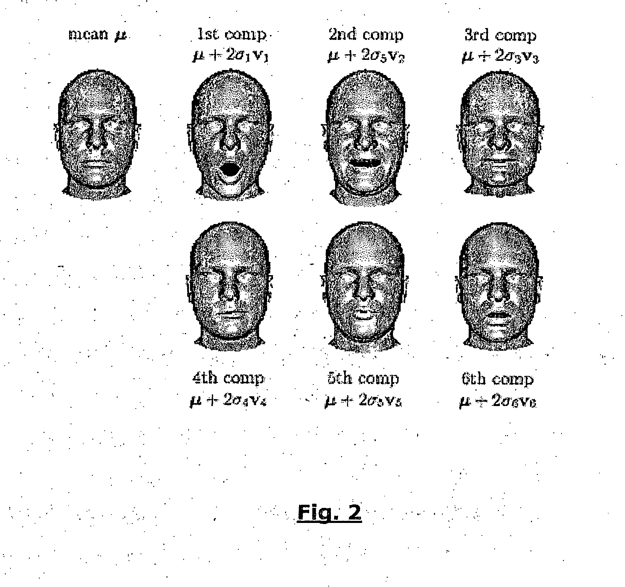

To compute the components of the model, there is used Principle Component Analysis (PCA) on the set of example scans

$$X = VWY$$

where the components $V = [v_1, \ldots, v_n]$ are (column-) orthonormal, W is diagonal and $\sigma_{iv} = w_i/\sqrt{n}$ where n is the number of scans. The resulting model which is learned from data is visualized in Fig. 2.

As mentioned earlier, the face animation model FAM is used together with the MM: each animated facial shape

$$x = \underbrace{\mu + \sum \alpha_i \sigma_i^u u_i + \sum \beta_i \sigma_i^v v_i}_{Fitting} = \underbrace{\mu + \xi_{id}}_{Fitting} + \xi_v$$

is represented as the MM mean $\mu$ and a linear combination of identity components $u_i$ (given by the MM and the fitting) and linear combination of components for the animation (the previously computed $v_i$ together with the weighting $\sigma_{iv}$). Each shape is then coded by its identity coefficients $\alpha_i$ and its animation coefficients $\beta_i$.

In the next step, for the speech animation, there is obtained a statistical model that describes the variability of each of the 13 visemes which have been scanned within the Face Animation Model. To compute such models, all scans i of a specific viseme v are projected into the FAM

$$\beta_{i,v} = \mathrm{diag}(\sigma_i^v) V^T \xi_i^v$$

and a multivariate Gaussian distribution is fitted to the data points again using PCA. The statistical models for each of the visemes

$$\mathcal{V} = (\mathrm{diag}(\sigma_i), \mathbf{B}, \bar{\beta} \in R^n)$$

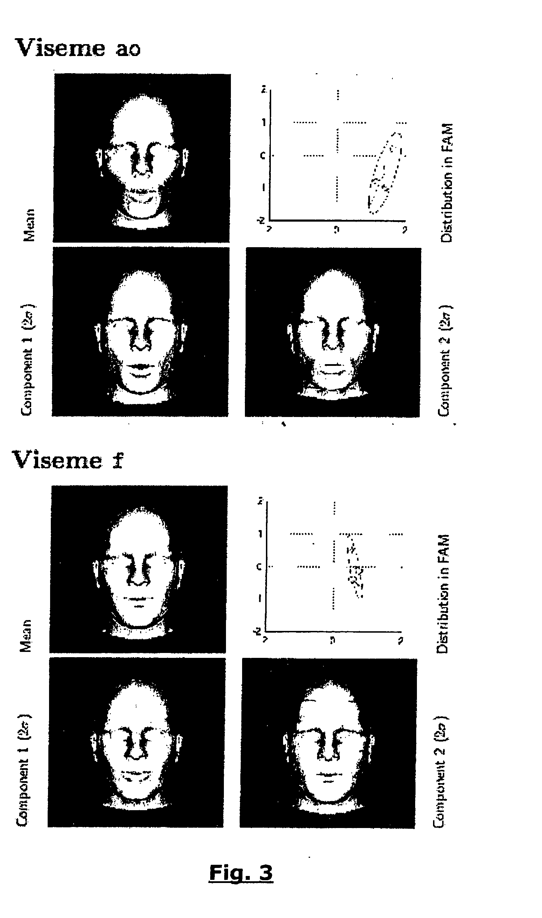

are the defined by the mean within the FAM ($\bar{\beta} \in R^n$), a (column-) orthonormal matrix of components B and a weighting diag($\sigma_i$). Examples of such viseme models can be see in Figure 3, which shows example viseme models for the viseme ao (top) and f (bottom).

In this manner a "probability distribution" of the components of the viseme space for the visemes can be obtained. The thu obtained statistical model represents the statistical variability of each of the plurality of V visemes within said face animation model based on said samples.

In the following there will be described the animation according to one embodiment.

In this embodiment there is used the timing information which has been obtained when acquiring the visemes together with the viseme models to render an image animation according to prerecorded sound files. It could as well be used to render a sequence of visems derived based on written language, or just based on a concatenation of visemes which are obtained in some way.

The output of the speech analysis is a list of visemes $v_i$ at time $t_i$

$$\mathcal{L} = (\mathcal{V}_i, t_i)$$

The animation is generated by fitting a smooth trajectory through the FAM

$$\beta(t) : R \rightarrow R^n$$

that defines a sequence of shapes

$$\xi(\beta(\mathbf{t})) = \mathrm{diag}(\sigma_i^v)\mathbf{V}\beta(t)$$

in vertex space.

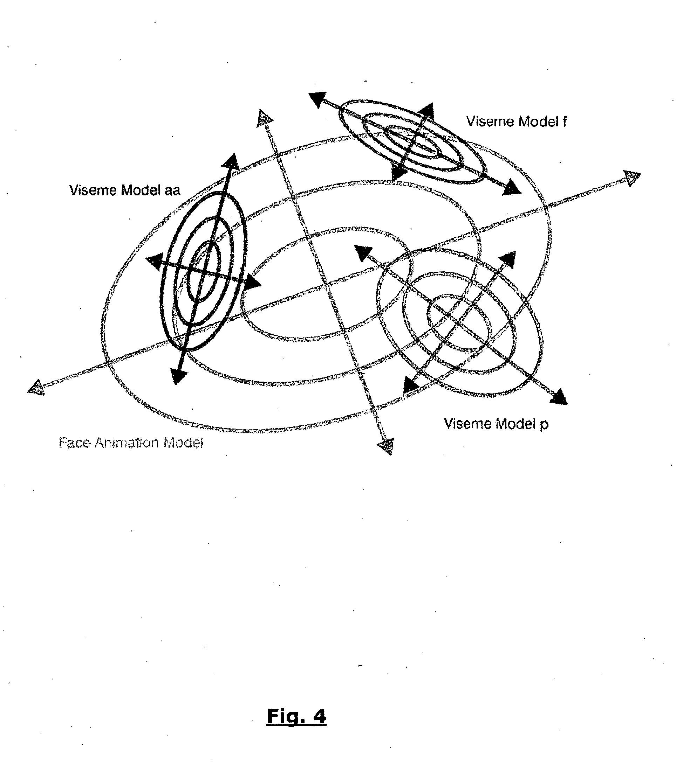

The fitting is done using a Bayesian approach. This is illustrated in Fig. 4 which shows how for the speech animation there is fitted a smooth trajectory through the Face Animation Model. At time t a likely shape for the corresponding viseme is generated (statistical models for three different visemes are visualized). (see Figure 4).

The Bayesian approach involves a trade-off between the probability of the shape in keyframe f belonging to the viseme at that time and an a priori-assumption of the smoothness of the mouth movements using first and second order derivatives.

In other words, there is made use of an a-priori-assumption on the smoothness of the trajectory which is represented by a probabilistic representation of the smoothness. This is based on the assumtion that the speed and the acceleration of a certain mouth movement (representing a transition from one shap to the other) is following a certain probaility distribution such that there is some limit on the speed an acceleration.

The probability of the trajectory given the list of visemes

$$p(\beta|\mathcal{L}) \sim p(\mathcal{L}|\beta) \cdot p(\beta)$$

is proportional to the probability of the list of visemes given the trajectory

$$p(\mathcal{L}|\beta) = \prod p(\mathcal{V}_i|\beta(t_i)) \tag{2.1}$$

$$= \prod \ldots e^{-\frac{1}{2}\|\mathrm{diag}(\sigma_i)^j \mathbf{B}^{j^T}(\beta(t_i) - \bar{\beta}^i)\|^2} \tag{2.2}$$

(this is an application of Bayes theorem) where there is made use of the statistical viseme models obtained previously times the a-priori probability of the trajectory

$$p(\beta) = \prod p(\beta(t_i)) \tag{2.3}$$

$$= \prod \eta_1 \ldots e^{-\frac{1}{2}\|\nabla \xi(\beta(t_i))\|^2} + \eta_2 \ldots e^{-\frac{1}{2}\|\nabla^2 \xi(\beta(t_i))\|^2} \tag{2.4}$$

$$= \prod \eta_1 \ldots e^{-\frac{1}{2}\|\xi(\beta(t_i)) - \xi(\beta(t_{i+1}))\|^2} \tag{2.5}$$

$$+ \eta_2 \ldots e^{-\frac{1}{2}\|\xi(\beta(t_{i+1})) - 2\xi(\beta(t_i)) + \xi(\beta(t_{i+1}))\|^2} \tag{2.6}$$

where there are made a-priori assumptions about the smoothness of the trajectory, in particular that humans are not able to move the mouth to quickly (first derivative=speed; parameter $\eta_1$) and to accelerate to rapidly (second derivative=velocity; parameter $\eta_2$).

Parameter $\eta_1$ parameter $\eta_2$ may be determined experimentally.

To maximize the probability, there is minimized the cost function

$$CF = \log p(\mathcal{V}|\beta) \cdot p(\beta) = \log p(\mathcal{V}|\beta) + \log p(\beta) \tag{2.7}$$

$$= \sum_{i=1}^{M} \|\mathrm{diag}(\sigma_{i,j}) \mathbf{U}_i^T (\mathbf{s}(t_i) - \bar{\mathbf{c}}_i)\|^2 + \tag{2.8}$$

$$\eta_1 \sum_{i=1}^{M-1} \|\mathbf{x}(\beta(t_i)) - \mathbf{x}(\beta(t_{i+1}))\|^2 + \tag{2.9}$$

$$\eta_2 \sum_{i=2}^{M-1} \|\mathbf{x}(\beta(t_{i+1})) - 2\mathbf{x}(\beta(t_i)) + \mathbf{x}(\beta(t_{i+1}))\|^2 \tag{2.10}$$

using L-BFGS-B, a standard quasi-Newton optimizer and M being the number of frames. In the above equation 2.8 the following correctio should be made: U should read W, s(ti) should read x($\beta(t_i)$), and $\bar{c}_i$ should read $\beta$.

Instead of the above example, other optimizing functions may be used as well.

In this manner the viseme representation which gives an optimum trajectory through the viseme space can be obtained and can be user for rendering the mouth animation.

The final video is rendered using the combined warpfield/3D approach as known from the art by rendering the resulting shapes.

It will be readily apparent to the skilled person that the methods, the elements, units and apparatuses described in connection with embodiments of the invention may be implemented in hardware, in software, or as a combination of both. In particular it will be appreciated that the embodiments of the invention and the elements of modules described in connection therewith may be implemented by a computer program or computer programs running on a computer or being executed by a microprocessor. Any apparatus implementing the invention may in particular take the form of a network entity such as a router, a server, a module acting in the network, or a mobile device such as a mobile phone, a smartphone, a PDA, or anything alike.

**Claims**

1. A computer-implemented method of three-dimensionally animating a mouth of a face in accordance with a given sequence $\mathcal{L}=(V_i, t_i)$ of visemes $V_i$ at time $t_i$, said method comprising:

For each of a plurality V of possibly visemes, obtaining by measurement a plurality of I different scans or samples of said visemes;
Computing the components of a Face Animation Model (FAM) based on Principal Component Analysis (PCA) on the scans, such that the animation is generated by fitting a smooth trajectory through the FAM that defines a sequence of shapes.
**Characterized by**:

Projecting each of said plurality of I samples of each of said plurality of V different visemes into said FAM,
Obtaining a statistical model which represents the statistical variability of each of the plurality of V visemes within said FAM based on said projecting of samples, another PCA and a multivariate Gaussian distribution fitting;
Representing the prior probability of a certain viseme representation by a probabilistic representation of the smoothness of the trajectory through said FAM;
Based on said prior probability and said statistical model, applying a Bayesian approach and a cost function minimization process to obtain the statistically best trajectory through said FAM for said given sequence of visemes,
wherein the probability of the trajectory given the sequence of visemes

$$p(\beta|\mathcal{L}) \sim p(\mathcal{L}|\beta) \cdot p(\beta)$$

is proportional to the probability of the sequence of visemes given the trajectory

$$p(\mathcal{L}|\beta) = \prod p(V_i|\beta(t_i))$$

2. The method of claim 1, wherein
said plurality of I samples are samples of a certain visemes spoken by different subjects; or
said plurality of I samples are samples of a certain viseme belonging to different words or spoken by a subject at different times.

3. The method of one of claims 1 or 2, wherein
registered scan of person i for viseme v is denoted with $x_{vi}$, the corresponding neutral-free scan

$$\xi_i^v = x_i^v - x_i^{neut}$$

is computed by subtracting the neutral scan $x_i^{neut}$ of the same individual. I, and the neutral-free scans for all visemes are stacked to a data matrix.

4. The method of one of the preceding claims, wherein
said obtaining a statistical model that describes the variability of each of the visemes which have been scanned within the Face Animation Model comprises:

projecting all scans i of a specific viseme v into the Face Animation Model by

$$\beta_{i,v} = \mathrm{diag}(\sigma_i^v)\mathbf{V}^T\xi_i^v .$$

5. The method of one of claims 1 to 4, wherein the statistical models for each of the visemes

$$\mathcal{V} = (\mathrm{diag}(\sigma_i), \mathbf{B}, \bar{\beta} \in R^n)$$

are the defined by the mean within the FAM ($\beta \in R^n$), a (column-) orthonormal matrix of components B and a weighting diag($\sigma_i$).

6. The method of one of claims 1 to 5, wherein
   for animating the sequence of visemes $v_i$ at time $t_i$

$$\mathcal{L} = (\mathcal{V}_i, t_i)$$

the animation is generated by fitting a smooth trajectory through the Face Animation Model

$$\beta(t) : R \to R^n$$

that defines a sequence of shapes

$$\xi(\beta(t)) = \mathrm{diag}(\sigma_i^v)\mathbf{V}\beta(t)$$

in vertex space.

7. The method of one of claims 1 to 6, wherein

$$\prod p(\mathcal{V}_i|\beta(t_i)) = \prod \dots e^{-\frac{1}{2}\|\mathrm{diag}(\sigma_i)^j \mathbf{B}^{j^T}(\beta(t_i)-\bar{\beta}^i)\|^2}$$

8. The method one of claims 1 to 7, wherein

$$p(\beta) = \prod p(\beta(t_i))$$
$$= \prod \eta_1 \dots e^{-\frac{1}{2}\|\nabla \xi(\beta(t_i))\|^2} + \eta_2 \dots e^{-\frac{1}{2}\|\nabla^2 \xi(\beta(t_i))\|^2}$$

9. The method of one of claims 4 to 8, wherein
   maximize the probability, there is minimized the cost function

$$CF = \log p(\mathcal{V}|\beta) \cdot p(\beta) = \log p(\mathcal{V}|\beta) + \log p(\beta)$$

10. An apparatus for three-dimensionally animating a mouth of a face in accordance with a given sequence $\mathcal{L} = (V_i, t_i)$ of visemes $V_i$ at time $t_i$, said apparatus comprising:

A module for, for each of a plurality V of possibly visemes, obtaining by measurement a plurality of I different scans or samples of said visemes;
A module for computing the components of a Face Animation Model (FAM) based on Principal Component Analysis (PCA) on the scans, such that the animation is generated by fitting a smooth trajectory through the FAM that defines a sequence of shapes.
**Characterized by**:

A module for projecting each of said plurality of I samples of each of said plurality of V different visemes into said FAM,
A module for obtaining a statistical model which represents the statistical variability of each of the plurality of V visemes within said FAM based on said projecting of samples, another PCA and a multivariate Gaussian distribution fitting;
A module for representing the prior probability of a certain viseme representation by a probabilistic representation of the smoothness of the trajectory through said FAM;
A module for, based on said prior probability and said statistical model, applying a Bayesian approach and a cost function minimization process to obtain the statistically best trajectory through said FAM for said given sequence of visemes,
wherein the probability of the trajectory given the sequence of visemes

$$p(\beta|\mathcal{L}) \sim p(\mathcal{L}|\beta) \cdot p(\beta)$$

is proportional to the probability of the sequence of visemes given the trajectory

$$p(\mathcal{L}|\beta) = \prod p(V_i|\beta(t_i))$$

11. The apparatus of claim 10, further comprising: a module for carrying out a method according to one of claims 1 to 9.

12. A computer program comprising computer executable code which when being executed on a computer enables said computer to carry out a method according to one of claims 1 to 9.

**Patentansprüche**

1. Ein computerimplementiertes Verfahren zum dreidimensionalen Animieren des Mundes eines Gesichts in Übereinstimmung mit einer gegebenen Sequenz $\mathcal{L} = (V_i, t_i)$ von Visemen $V_i$ zum Zeitpunkt $t_i$, wobei das Verfahren aufweist:

Für jedes einer Mehrzahl V von möglichen Visemen, Erhalten einer Mehrzahl I von unterschiedlichen Scans oder Samples der Viseme;
Berechnen der Komponenten eines Gesichtsanimationsmodells (Face Animation Model FAM) basierend auf Hauptkomponentenanalyse (Principle Component Analysis PCA) der Scans, derart, dass die Animation erzeugt wird durch Fitten einer geglätteten Trajektorie durch das FAM, die eine Sequenz von Formen definiert, **gekennzeichnet durch**:

Projektieren jedes der Mehrzahl I von Samplen von jedem der Mehrzahl V von unterschiedlichen Visemen in das FAM,

Erhalten eines statistischen Modells, das die statistische Variabilität von jedem der Mehrzahl von Visemen innerhalb des FAM repräsentiert, basierend auf dem Projezieren von Samplen, einer anderen PCA und einem multivarianten Gauß-Verteilungs-Fitting;

Repräsentieren der vorausgehenden Wahrscheinlichkeit einer bestimmten Visemrepräsentation **durch** eine probabilistische Repräsentation der Glättung der Trajektorie **durch** das FAM;

basierend auf der vorausgehenden Wahrscheinlichkeit und dem statistischen Modell, Anwendung eines Bayesschen Ansatzes und eines Kostenfunktionsminimierungsprozesses, um die statistisch beste Trajektorie **durch** das FAM für die gegebene Sequenz von Visemen zu erhalten, wobei die Wahrscheinlichkeit der Trajektorie bei gegebener Sequenz von Visemen

$$p(\beta|\mathcal{L}) \sim p(\mathcal{L}|\beta) \cdot p(\beta)$$

proportional ist zu der Wahrscheinlichkeit der Sequenz von Visemen bei gegebener Trajektorie

$$p(\mathcal{L}|\beta) = \prod p(\mathcal{V}_i|\beta(t_i)) .$$

2. Das Verfahren nach Anspruch 1, wobei
die Mehrzahl I von Samples Samples eines bestimmten Visems sind, das von unterschiedlichen Subjekten gesprochen wird; oder
die Mehrzahl I von Samples Samples eines bestimmten Visems sind, die zu unterschiedlichen Worten gehören oder von einem Subjekt zu unterschiedlichen Zeiten gesprochen werden.

3. Das Verfahren nach Anspruch 1 oder 2, wobei
der registrierte Scan von Person i für Visem v bezeichnet wird als $X_{vi}$, der entsprechende neutral-freie Scan

$$\xi_i^v = \mathbf{x}_i^v - \mathbf{x}_i^{neut}$$

berechnet wird durch Subtrahieren des neutralen Scans $\mathbf{x}_i^{neut}$ des gleichen Individuums I und die neutral-freien Scans für alle Viseme in einer Datenmatrix gespeichert werden.

4. Das Verfahren nach einem der vorhergehenden Ansprüche, wobei
das Erhalten eines statistischen Modells, das die Variabilität von jedem der Viseme, die innerhalb des Gesichtsanimationsmodells gescannt wurden, beschreibt, aufweist:

Projezieren aller Scans i eines spezifischen Visems v auf das Gesichtsanimationsmodell durch

$$\beta_{i,v} = \mathrm{diag}(\sigma_i^v)\mathbf{V}^T\xi_i^v .$$

5. Das Verfahren nach einem der Ansprüche 1 bis 4, wobei
die statistischen Modelle für jedes der Viseme

$$\mathcal{V} = (\mathrm{diag}(\sigma_i), \mathbf{B}, \bar{\beta} \in R^n)$$

definiert werden durch das Mittel innerhalb des FAM ($\bar{\beta} \in R^n$), eine (Spalten-) Orthonomalmatrix von Komponenten B und eine Gewichtung $\mathrm{diag}(\sigma_i)$.

**6.** Das Verfahren nach einem der Ansprüche 1 bis 5, wobei zum Animieren der Sequenz von Visemen $V_i$ zum Zeitpunkt $t_i$

$$\mathcal{L} = (\mathcal{V}_i, t_i)$$

die Animation erzeugt wird durch Fitten einer geglätteten Trajektorie durch das Gesichtsanimationsmodell

$$\beta(t) : R \longrightarrow R^n ,$$

die eine Sequenz von Formeln

$$\xi(\beta(t)) = \mathrm{diag}(\sigma_i^{v}) \mathbf{V} \beta(t)$$

im Vertexraum definiert.

**7.** Das Verfahren nach einem der Ansprüche 1 bis 6, wobei

$$\prod p(\mathcal{V}_i | \beta(t_i)) = \prod \dots e^{-\frac{1}{2}\|\mathrm{diag}(\sigma_i)^{v} \mathbf{B}^{jT}(\beta(t_i) - \bar{\beta}^i)\|^2} .$$

**8.** Das Verfahren nach einem der Ansprüche 1 bis 7, wobei

$$p(\beta) = \prod p(\beta(t_i))$$
$$= \prod \eta_1 \dots e^{-\frac{1}{2}\|\nabla \xi(\beta(t_i))\|^2} + \eta_2 \dots e^{-\frac{1}{2}\|\nabla^2 \xi(\beta(t_i))\|^2} .$$

**9.** Das Verfahren nach einem der Ansprüche 4 bis 8, wobei zum Maximieren der Wahrscheinlichkeit die Kostenfunktion

$$CF = \log p(\mathcal{V}|\beta) \cdot p(\beta) = \log p(\mathcal{V}|\beta) + \log p(\beta) .$$

minimiert wird.

**10.** Eine Vorrichtung zum dreidimensionalen Animieren eines Mundes eines Gesichts in Übereinstimmung mit einer gegebenen Sequenz $\mathcal{L}$ = ($V_1$, $t_2$) von Visemen $V_i$ zum Zeitpunkt $t_i$, wobei die Vorrichtung aufweist:

Ein Modul zum, für jedes einer Mehrzahl V von möglichen Visemen, Erhalten einer Mehrzahl I von unterschiedlichen Scans oder Samples der Viseme;

ein Modul zum Berechnen der Komponenten eines Gesichtsanimationsmodells (Face Animation Model FAM) basierend auf Hauptkomponentenanalyse (Principle Component Analysis PCA) der Scans, derart, dass die Animation erzeugt wird durch Fitten einer geglätteten Trajektorie durch das FAM, die eine Sequenz von Formen definiert, **gekennzeichnet durch**:

Ein Modul zum Projezieren jedes der Mehrzahl I von Samplen von jedem der Mehrzahl V von unterschiedlichen Visemen in das FAM,

Ein Modul zum Erhalten eines statistischen Modells, das die statistische Variabilität von jedem der Mehrzahl von Visemen innerhalb des FAM repräsentiert, basierend auf dem Projezieren von Samplen, einer anderen PCA und einem multivarianten Gauß-Verteilungs-Fitting;

ein Modul zum Repräsentieren der vorausgehenden Wahrscheinlichkeit einer bestimmten Visemrepräsentation **durch** eine probabilistische Repräsentation der Glättung der Trajektorie **durch** das FAM;

ein Modul zur, basierend auf der vorausgehenden Wahrscheinlichkeit und dem statistischen Modell, Anwendung eines Bayesschen Ansatzes und eines Kostenfunktionsminimierungsprozesses, um die statistisch beste Trajektorie **durch** das FAM für die gegebene Sequenz von Visemen zu erhalten, wobei die Wahrscheinlichkeit der Trajektorie bei gegebener Sequenz von Visemen

$$p(\beta|\mathcal{L}) \sim p(\mathcal{L}|\beta) \cdot p(\beta)$$

proportional ist zu der Wahrscheinlichkeit der Sequenz von Visemen bei gegebener Trajektorie

$$p(\mathcal{L}|\beta) = \prod p(\mathcal{V}_i|\beta(t_i))$$

**11.** Eine Vorrichtung nach Anspruch 10, ferner aufweisend:

Ein Modul zum Ausführen eines Verfahrens gemäß einem der Ansprüche 1 bis 9.

**12.** Ein Computerprogramm aufweisend einen computerausführbaren Code, der, wenn er auf einem Computer ausgeführt wird, den Computer in die Lage versetzt, ein Verfahren gemäß einem der Ansprüche 1 bis 9 auszuführen.

**Revendications**

**1.** Procédé mis en oeuvre par un ordinateur pour animer de manière tridimensionnelle une bouche d'un visage selon une séquence donnée $\mathcal{L}$=($V_i$,$t_i$) de visèmes Vi à l'instant $t_i$, ledit procédé comprenant :

pour chacun d'une pluralité V de visèmes possibles, obtenir, par une mesure, une pluralité de I balayages ou échantillons différents desdits visèmes ;

calculer des composants d'un modèle d'animation de visage (FAM) sur la base d'une analyse de composants principaux (PCA) sur les balayages, de sorte que l'animation soit générée par un ajustement à une trajectoire régulière par l'intermédiaire du FAM qui définit une séquence de formes, **caractérisé par** les étapes:

projeter chacun de ladite pluralité de I échantillons de chacun de ladite pluralité de V visèmes différents dans ledit FAM,

obtenir un modèle statistique qui représente la variabilité statistique de chacun de la pluralité de V visèmes dans ledit FAM sur la base de ladite projection d'échantillons, d'un autre PCA et d'un ajustement à une distribution gaussienne à plusieurs variables ;

représenter la probabilité antérieure d'une certaine représentation de visème par une représentation probabiliste de la régularité de la trajectoire par l'intermédiaire dudit FAM ;

sur la base de ladite probabilité antérieure et dudit modèle statistique, l'application d'une approche bayésien et d'un processus de minimisation de fonction de coût pour obtenir statistiquement la meilleure trajectoire par l'intermédiaire dudit FAM pour ladite séquence donnée de visèmes,

dans lequel la probabilité de la trajectoire étant donné la séquence de visèmes

$$p(\beta|\mathcal{L}) \sim p(\mathcal{L}|\beta) \cdot p(\beta)$$

est proportionnelle à la probabilité de la séquence de visèmes étant donné la trajectoire

$$p(\mathcal{L}|\beta) = \prod p(V_i|\beta(t_i))$$

2. Procédé selon la revendication 1, dans lequel

ladite pluralité de I échantillons sont des échantillons d'un certain visème prononcé par différents sujets ; ou ladite pluralité de I échantillons sont des échantillons d'un certain visème appartenant à différents mots ou prononcé par un sujet à différents instants.

3. Procédé selon l'une des revendications 1 ou 2, dans lequel

un balayage enregistré d'une personne i pour un visème v est désigné par $x_{vi}$, le balayage exempt de neutre correspondant

$$\xi_i^v = x_i^v - x_i^{neut}$$

est calculé en soustrayant le balayage neutre $x_i^{neut}$ du même individu I, et

les balayages exempts de neutres pour tous les visèmes sont empilés dans une matrice de données.

4. Procédé selon l'une des revendications précédentes, dans lequel

ladite obtention d'un modèle statistique qui décrit la variabilité de chacun des visèmes qui ont été balayés dans le modèle d'animation de visage comprend :

la projection de tous les balayages i d'un visème v spécifique dans le modèle d'animation de visage par

$$\beta_{i,v} = \mathrm{diag}(\sigma_i^v) V^T \xi_i^v$$

5. Procédé selon l'une des revendications 1 à 4, dans lequel

les modèles statistiques pour chacun des visèmes

$$\mathcal{V} = (\mathrm{diag}(\sigma_i), \mathbf{B}, \bar{\beta} \in R^n)$$

sont définis par la moyenne dans le FAM ($\bar{\beta} \in R^n$), une matrice orthonormale (colonne) de composants B et une pondération diag ($\sigma_i$).

6. Procédé selon l'une des revendications 1 à 5, dans lequel

pour animer la séquence de visèmes $v_i$ à l'instant $t_i$

$$\mathcal{L} = (\mathcal{V}_i, t_i)$$

l'animation est générée par un ajustement à une trajectoire régulière par l'intermédiaire du modèle d'animation de visage

$$\beta(t) : R \rightarrow R^n$$

qui définit une séquence de formes

$$\xi(\beta(t)) = \mathrm{diag}(\sigma_i^v)\mathbf{V}\beta(t)$$

dans un espace de sommets.

**7.** Procédé selon l'une des revendications 1 à 6, dans lequel

$$\prod p(\mathcal{V}_i|\beta(t_i)) = \prod \ldots e^{-\frac{1}{2}\|\mathrm{diag}(\sigma_i)^v \mathbf{B}^{jT}(\beta(t_i)-\beta^j)\|^2}$$

**8.** Procédé selon l'une des revendications 1 à 7, dans lequel

$$p(\beta) = \prod p(\beta(t_i))$$
$$= \prod \eta_1 \ldots e^{-\frac{1}{2}\|\nabla\xi(\beta(t_i))\|^2} + \eta_2 \ldots e^{-\frac{1}{2}\|\nabla^2\xi(\beta(t_i))\|^2}$$

**9.** Procédé selon l'une des revendications 4 à 8, dans lequel
pour augmenter à un maximum la probabilité, la fonction de coût

$$CF = \log p(\mathcal{V}|\beta) \cdot p(\beta) = \log p(\mathcal{V}|\beta) + \log p(\beta)$$

est réduite à un minimum.

**10.** Appareil pour animer de manière tridimensionnelle une bouche d'un visage selon une séquence donnée $\mathcal{L} = (V_i, t_i)$ de visèmes $V_i$ à un instant $t_i$, ledit appareil comprenant :

un module pour, pour chacun d'une pluralité V de visèmes possibles, obtenir, par une mesure, une pluralité de I balayages ou échantillons différents desdits visèmes ;
un module pour calculer les composants d'un modèle d'animation de visage (FAM) sur la base d'une analyse de composants principaux (PCA) sur les balayages, de sorte que l'animation soit générée par un ajustement à une trajectoire régulière par l'intermédiaire du FAM qui définit une séquence de formes,
**caractérisé par** :

un module pour projeter chacun de ladite pluralité de I échantillons de chacun de ladite pluralité de V visèmes différents dans ledit FAM,

un module pour obtenir un modèle statistique qui représente la variabilité statistique de chacun de la pluralité de V visèmes dans ledit FAM sur la base de ladite projection d'échantillons, d'un autre PCA et d'un ajustement à une distribution gaussienne à variables multiples ;

un module pour représenter la probabilité antérieure d'une certaine représentation de visème par une représentation probabiliste de la régularité de la trajectoire par l'intermédiaire dudit FAM ;

un module pour, sur la base de ladite probabilité antérieure et dudit modèle statistique, appliquer une approche bayésienne et un processus de minimisation de fonction de coût pour obtenir statistiquement la meilleure trajectoire par l'intermédiaire dudit FAM pour ladite séquence donnée de visèmes,

dans lequel la probabilité de la trajectoire étant donné la séquence de visèmes

$$p(\beta|\mathcal{L}) \sim p(\mathcal{L}|\beta) \cdot p(\beta)$$

est proportionnelle à la probabilité de la séquence de visèmes étant donné la trajectoire

$$p(\mathcal{L}|\beta) = \prod p(V_i|\beta(t_i))$$

**11.** Appareil selon la revendication 10, comprenant en outre :

un module pour exécuter un procédé selon l'une des revendications 1 à 9.

**12.** Programme d'ordinateur comprenant un code exécutable par un ordinateur qui, lorsqu'il est exécuté par un ordinateur, permet au dit ordinateur d'effectuer un procédé selon l'une des revendications 1 à 9.

**Fig. 1**

mean $\mu$     1st comp $\mu + 2\sigma_1 v_1$     2nd comp $\mu + 2\sigma_5 v_2$     3rd comp $\mu + 2\sigma_3 v_3$

4th comp $\mu + 2\sigma_4 v_4$     5th comp $\mu + 2\sigma_3 v_5$     6th comp $\mu + 2\sigma_6 v_6$

**Fig. 2**

Viseme ao

Viseme f

Fig. 3

Viseme Model f

Viseme Model aa

Viseme Model p

Face Animation Model

**Fig. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- SIGGRAPH 99
- **EZZAT ; GEIGER ; POGGIO.** Trainable videorealistic speech animation. *ACM Trans. Graph.,* 2002, 388-398
- **V. BLANZ ; C. BASSO ; T. POGGIO ; T. VETTER.** Reanimating Faces in Images and Video. *EUROGRAPHICS,* 2003
- **DENG ; NEUMANN ; LEWIS ; KIM ; BULUT ; NARAYANAN.** Expressive facial animation synthesis by learning speech co-articulations and expression spaces. *IEEE Transaction on Visualization and Computer Graphics,* 2006
- **V. BLANZ ; T. VETTER.** A Morphable Model for the Synthesis of 3D Faces. *SIGGRAPH,* vol. 99, 187-194